# EUROPÄISCHE PATENTSCHRIFT

(11) **EP 2 203 968 B1**
(45) Veröffentlichungstag und Bekanntmachung des Hinweises auf die Patenterteilung: **07.09.2011**
(21) Anmeldenummer: 08784908.9
(22) Anmeldetag: 21.07.2008
(51) Int. Cl.: H02K 1/28, H02K 15/03, H02K 7/14

(54) **ELEKTROMOTOR**
ELECTRIC MOTOR
MOTEUR ÉLECTRIQUE

(30) Priorität: 31.10.2007 DE 102007054322
(43) Veröffentlichungstag der Anmeldung: 07.07.2010
(73) Patentinhaber: Ebm-Papst St. Georgen GmbH & CO. KG, 78112 St. Georgen (DE)
(72) Erfinder: STROHM, Rainer, 78112 St. Georgen (DE); MAIER, Tobias, 78628 Rottweil (DE); HILDEBRAND, Volker, 77977 Rust (DE); PFAFF, Jürgen, 79366 Herbolzheim (DE); KARWATH, Arno, 78652 Deisslingen (DE)
(74) Vertreter: Raible, Tobias
(86) Internationale Anmeldenummer: PCT/EP2008/005941
(87) Internationale Veröffentlichungsnummer: WO 2009/056180

(56) Entgegenhaltungen:
- JP-A- 2 007 841
- JP-A- 11 332 136
- JP-A- 60 190 153
- US-A- 4 791 328
- US-A1- 2007 013 242

## Beschreibung

Die Erfindung betrifft einen Elektromotor mit einem Stator und mit einem Rotor, in welch letzterem ein becherartiges Rückschlussteil (yoke) befestigt ist. In diesem Rückschlussteil ist ein Magnetring des Rotors verklebt.

Derartige Magnetringe können auf verschiedene Art hergestellt werden, z.B. aus einem gummiartigen Werkstoff, in den hartferromagnetische Partikel eingebettet sind. Dieser gummiartige Werkstoff wird dann in einem solchen Rückschlussteil befestigt. Solche Magnetringe bezeichnet man auch als "Gummimagnete".

Es gibt auch Magnetringe, die aus einem Kunststoff-Rohgranulat durch Spritzguss hergestellt werden, z.B. aus SmFeN mit PA 12-Matrix, und dort ist dem Roh-Granulat häufig ein Gleitmittel zugesetzt, das Silikonmoleküle enthält. Solche Magnetringe werden nachfolgend als "kunststoffgebundene Magnetringe" bezeichnet.

Bei derartigen kunststoffgebundenen Magnetringen mit Silikonzusatz ist das Kleben nicht prozesssicher, d.h. die Klebemasse vernetzt zwar mit dem Rückschlussteil, aber durch Verunreinigungen, wie z.B.
- Silikonreste
- Trennmittel
- Öle
- Fette etc.,
die sich auf der zu verklebenden Seite des kunststoffgebundenen Magnetrings befinden, ist dort unter Umständen keine ausreichende Vernetzung der Klebemasse mit dem Magnetring möglich, und deshalb besteht die Gefahr, dass sich die relative Lage von Magnetring und Rotorgehäuse bei weiteren Prozessschritten, z.B. bei thermischer oder mechanischer Belastung, ändert.

Aus diesem Grund sind vor dem Kleben aufwändige Reinigungsprozesse notwendig, um die Prozesssicherheit zu erhöhen. Zudem säubern solche Reinigungsprozesse die zu verklebende Oberfläche nur für eine gewisse Zeit. Nachdiffundierende Silikonmoleküle verschlechtern die Klebefähigkeit nicht nur unmittelbar vor dem Kleben, sondern auch während der Zeit, in der die Klebemasse aushärtet.

Während also die Klebemasse mit dem Rückschlussteil zuverlässig vernetzt, ist diese Vernetzung auf der Oberfläche eines solchen kunststoffgebundenen Magnetrings durch die erwähnten Verunreinigungen nicht in jedem Fall in ausreichendem Maße möglich. Die US 2007/0013242 A1 zeigt einen Elektromotor mit einem Stator und einem Rotor. Der Rotor hat eine becherartige Nabe, und ein zylinderförmiger Permanentmagnet haftet an einer Innenseite der Nabe.

Die JP 11-332136 A zeigt einen Innenläufermotor mit einem Statorblechpaket, an dessen Außenseite axial verlaufende Vertiefungen vorgesehen sind. Das Statorblechpaket wird mit einem Harz vergossen, welches die Vertiefungen ausfüllt, wodurch eine bessere Verbindung zwischen dem Harz und dem Statorblechpaket bewirkt wird.

Es ist deshalb eine Aufgabe der Erfindung, einen neuen Elektromotor bereit zu stellen.

Nach der Erfindung wird diese Aufgabe gelöst durch den Gegenstand des Patentanspruchs 1. Hierdurch erhält man eine größere Prozesssicherheit. Die geringen Adhäsionskräfte zum kunststoffgebundenen Magnetring, wie sie aus den geschilderten Gründen gelegentlich auftreten können, werden durch die mechanischen Formschlüsse (zahnradartige Eingriffe, Hinterschneidungen, etc.) kompensiert. Man erhält eine voll zufrieden stellende Prozesssicherheit und eine normale Lebensdauer des Elektromotors. Ein Versagen der Klebeverbindung erscheint ausgeschlossen.

Weitere Einzelheiten und vorteilhafte Weiterbildungen der Erfindung ergeben sich aus den im folgenden beschriebenen und in der Zeichnung dargestellten, in keiner Weise als Einschränkung der Erfindung zu verstehenden Ausführungsbeispielen. Es zeigt:
- Fig. 1: ein Ausführungsbeispiel eines Elektromotors, in auseinander gezogener Darstellungsweise,
- Fig. 2: eine raumbildliche, stark vergrößerte Darstellung einer ersten Ausführungsform eines Magnetrings 60, der auf seiner äußeren Umfangsfläche 61 mit reliefartigen, flachen Erhöhungen und Vertiefungen und außerdem in Umfangsrichtung mit einer Ringnut 88 versehen ist,
- Fig. 3: einen vergrößerten Ausschnitt aus dem Magnetring 60 der Fig. 2,
- Fig. 4: eine erste Zeichnung zur Erläuterung der Montage des Magnetrings 60 in einem Rückschlussteil 56, 57 des Rotors,
- Fig. 5: eine zweite Zeichnung analog Fig. 4, bei der der Magnetring 60 vollständig in das Rückschlussteil 56, 57 eingeschoben ist,
- Fig. 6: eine Darstellung analog Fig. 5, bei der der Rotor 26 am Stator 30 montiert ist,
- Fig. 7: eine zweite Ausführungsform eines Magnetrings 60, der mit reliefartigen Erhöhungen und Vertiefungen versehen ist,
- Fig. 8: die Vergrößerung eines Ausschnitts aus Fig. 7,
- Fig. 9: eine dritte Ausführungsform eines Magnetrings 60, der mit reliefartigen Erhöhungen und Vertiefungen versehen ist,
- Fig. 10: die Vergrößerung eines Ausschnitts aus Fig. 9,
- Fig. 11: eine vierte Ausführungsform eines Magnetrings 60, der mit reliefartigen Erhöhungen und Vertiefungen versehen ist,
- Fig. 12: die Vergrößerung eines Ausschnitts aus Fig. 11,
- Fig. 13: eine fünfte Ausführungsform eines Magnetrings 60, der mit reliefartigen Erhöhungen und Vertiefungen versehen ist, und
- Fig. 14: die Vergrößerung eines Ausschnitts aus Fig. 13.

Gleiche oder gleich wirkende Teile werden im Folgenden meist mit denselben Bezugszeichen bezeichnet und nur einmal beschrieben. Begriffe wie links, rechts, oben, unten beziehen sich auf die jeweilige Figur.

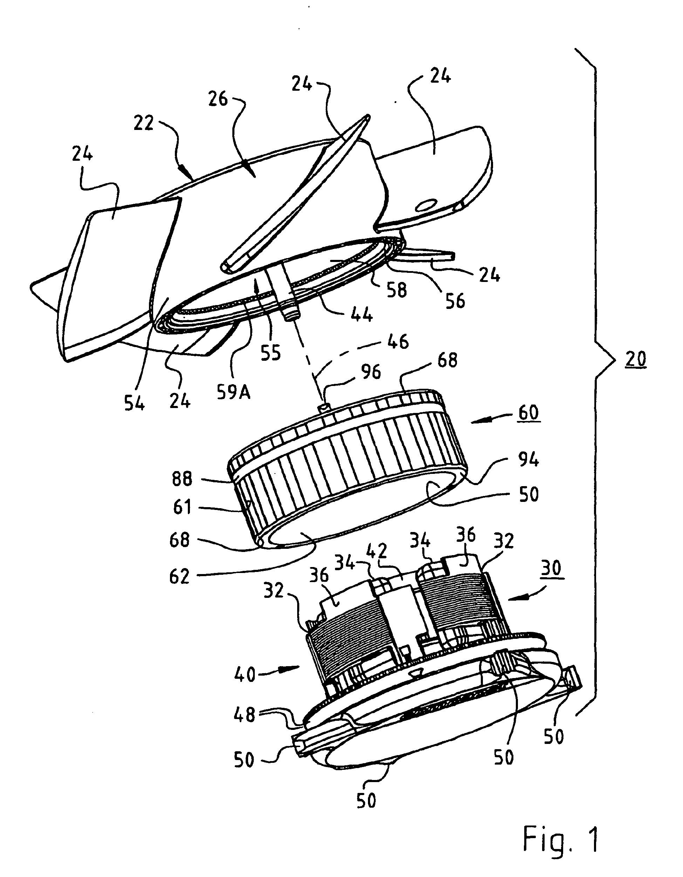

Fig. 1 zeigt in auseinander gezogener Darstellung einen Außenläufermotor 20, der hier beispielhaft zum Antrieb eines Lüfterrades 22 dient, das mit fünf Lüfterflügeln 24 dargestellt ist, die auf einem Außenrotor 26 befestigt sind.

Im Inneren des Außenrotors 26 befindet sich ein Innenstator 30 von üblichem Aufbau, hier mit vier Statorpolen 32, die mit einer Statorwicklungsanordnung 34 bewickelt sind. Die Statorpole 32 sind beispielhaft als ausgeprägte Pole dargestellt. Die Spulenkörper sind mit 36 bezeichnet.

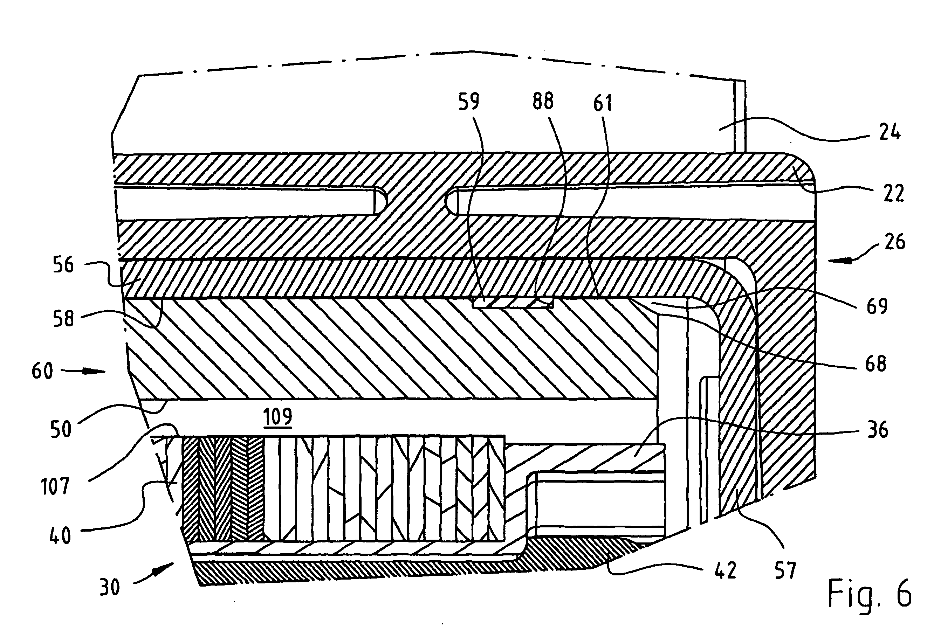

Die Statorpole 32 sind Teil eines Blechpakets 40, das gewöhnlich auf ein Lagerrohr 42 aufgepresst ist und das in Fig. 6 teilweise sichtbar ist. In ihm befinden sich (nicht dargestellte) Lager, z.B. Gleitlager oder Kugellager, für die Lagerung einer Rotorwelle 44. In Fig. 1 ist die Lage der Drehachse des Außenrotors 26 mit 46 bezeichnet und strichpunktiert angedeutet.

Das Lagerrohr 42 ist an einem Trageflansch 48 befestigt, der seinerseits mittels Streben 50, die in Fig. 1 nur angedeutet sind, mit einem (nicht dargestellten) Luftführungsgehäuse verbunden ist, welches die Lüfterflügel 24 mit einem kleinen Abstand umgibt. Solche Lüfter werden häufig als Gerätelüfter verwendet, z.B. zur Kühlung von Computern.

Der Außenrotor 26 ist etwa nach Art eines Topfs oder einer Glocke ausgebildet. Der Topf ist auf seiner Außenseite gewöhnlich aus einem geeigneten Kunststoff 54 hergestellt und in seinem Inneren mit einem Topf oder Becher 56 aus einem magnetisch leitenden Werkstoff fest verbunden, der eine offene Seite 55 (Fig. 1) hat, an dessen Boden 57 die Welle 44 befestigt ist, und dessen Innenseite mit 58 bezeichnet ist. Der Becher 56 dient als magnetischer Rüchschluss für einen hohlzylindrischen Dauermagneten 60.

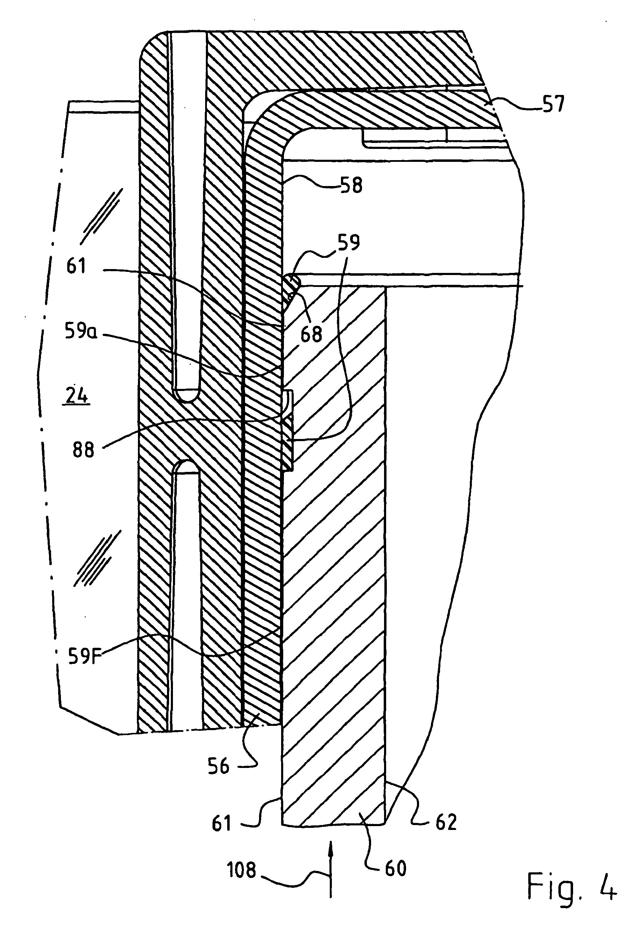

In diese Innenseite 58 ist mittels einer geeigneten Klebemasse 59 (Fig. 4) dieser Dauermagnet 60 mit seiner Außenseite 61 eingeklebt. Je nach den Anforderungen, (z. B. Umgebungsbedingungen, magnetische Werte, Fertigungstechnik, Dosierung, Aushärteverfahren) können unterschiedliche Klebertypen verwendet werden:
- Anaerobe Kleber: Vorteile sind z. B. ein kleiner Klebespalt, d. h. das Volumen des Magnetrings 60 wird maximiert.
- Epoxidharz-Kleber mit einer oder mit zwei Komponenten. Der Vorteil ist, dass hier hohe Verwendungstemperaturen möglich sind.
- Polyurethankleber. Der Vorteil ist, dass diese zähelastisch sein und deshalb unterschiedliche Wärmeausdehnungen der zu verklebenden Materialien besonders gut ausgleichen können.

### Beispiele für Klebstoffe:

| | | |
|---|---|---|
| Anaerobe Kleber: | Firma Henkel: | Loctite 510, Loctite 128500 |
| | Firma Delo: | Delo-ML-Klebstoffe |
| | | |
| Epoxidharz-Kleber: | Firma Henkel: | Loctite 95xx-Reihe |
| | Firma Delo: | Delo-Monopox-Klebstoffe |
| | | Delo-Duopox-Klebstoffe |
| Polyurethan-Kleber: | Firma Henkel: | Macroplast-Klebstoffe |
| | Firma Delo: | Delo-PUR-Klebstoffe |

Die hohlzylindrische Innenseite des Dauermagneten 60 begrenzt den magnetisch wirksamen Luftspalt 109 (Fig. 6) des Motors 20 nach außen hin, während die Statorpole 32 den Luftspalt 109 nach innen hin begrenzen.

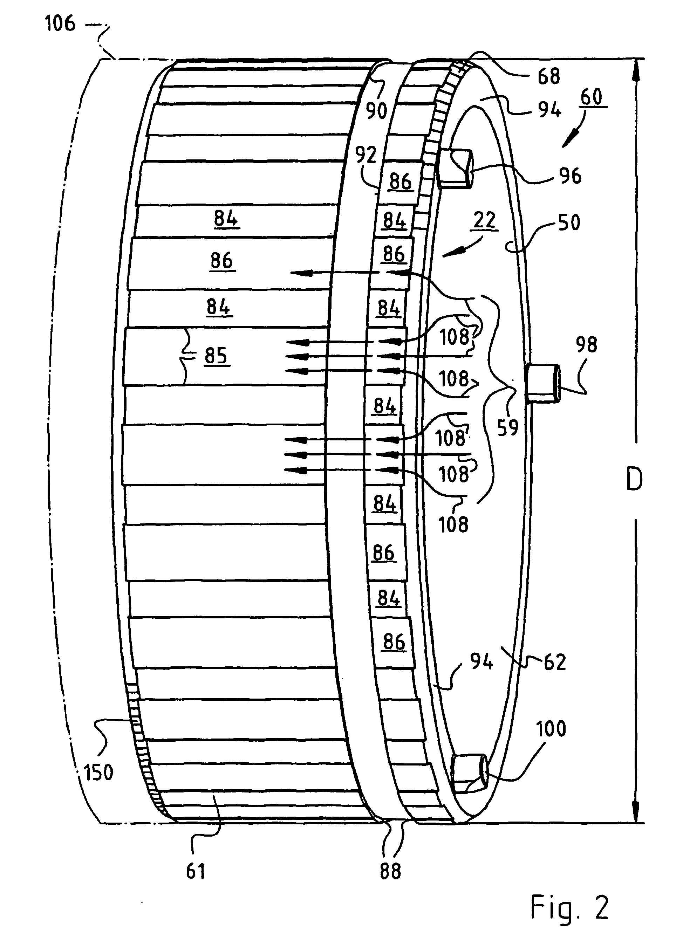

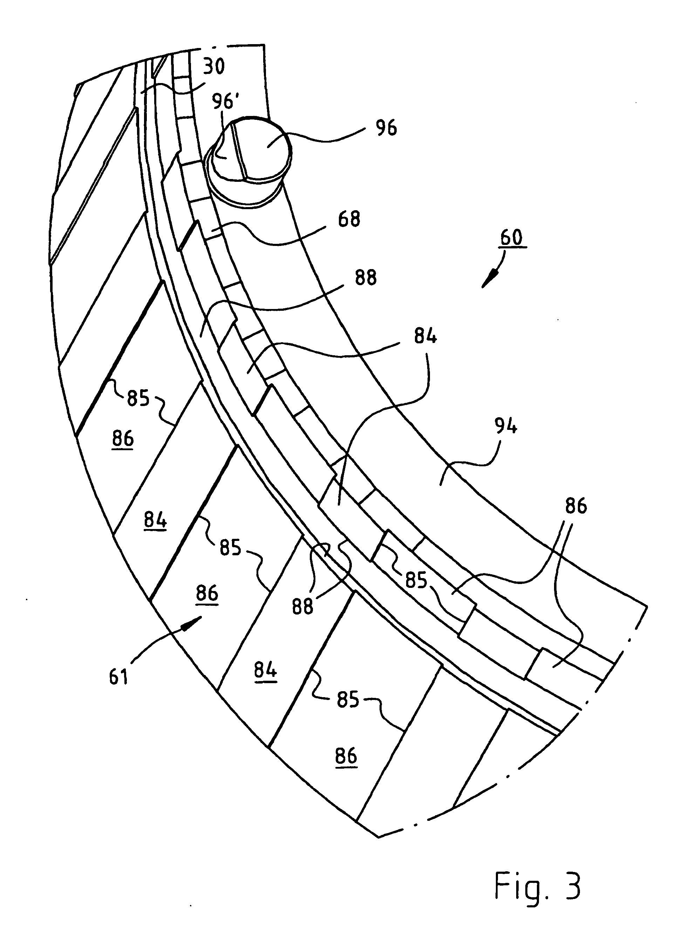

Fig. 2 und Fig. 3 zeigen den Magnetring 60 der Fig. 1 in vergrößerter, raumbildlicher Darstellung. Sein Durchmesser D liegt in der Mehrzahl der Fälle zwischen 20 und 40 mm, d.h. die Zeichnung ist stark vergrößert, um Einzelheiten darstellen zu können.

Die Außenseite 61 des Magnetrings 60 ist mit flachen Erhöhungen, hier in Form von Längsrippen 84, und mit flachen Vertiefungen, hier in Form von Längsnuten 86, versehen, welche wie dargestellt so verlaufen, dass beim Einschieben des Magnetrings 60 in den Rückschlussring 56, und bei Dosieren des Klebers auf die Innenwand des Bechers 56, Klebemasse 59 in die Längsnuten 86 einströmen kann (Kleberdosierung auf die Innenwand des Bechers 56.)

Außerdem hat der Magnetring 60 eine flache Ringnut 88, welche hier etwas tiefer ist als die Längsnuten 86. Der Kleber füllt während des Einschiebens die Ringnut 88, und er füllt in Einschieberichtung die darüber liegenden Längsnuten 86. Die Tiefe der Längsnuten 86 beträgt im Mittel weniger als 1 mm und bevorzugt weniger als 0,5 mm.

Alternativ kann der Kleber auch in die Ringnut 88 dosiert werden. Wird der Kleber auf den Magnetring 60 dosiert, bevorzugt also in die Ringnut 88, so wird während des Einschiebens des Magneten 60 in den Becher 56 der Kleber in die Längsnuten 86 verteilt.

Die Ringnut 88 bildet bei diesem Beispiel an beiden Seiten Schultern 90 bzw. 92, welche zur formschlüssigen Verbindung mit der Klebemasse 59 dienen, nachdem diese ausgehärtet ist. In der gleichen Weise dienen die steilen Übergänge 85 zwischen den Längsrippen 84 und den Längsnuten 86 als Schultern, welche eine Verdrehung zwischen dem Magnetring 60 und dem becherartigen Rotorteil 56 (Fig. 1) verhindern, in das der Magnetring 60 eingeklebt ist.

An seiner in Fig. 2 rechten Stirnseite 94 hat der Magnetring 60 drei axial vorstehende Zapfen 96, 98, 100, die während der Montage und während des Aushärtens der Klebemasse 59 als Abstandshalter 57 dienen und dadurch die axiale Position des Magnetrings 60 relativ zum Rotorteil 56 sicher stellen. Sie können auf ihren radialen Außenseiten Schrägflächen 96', 98', 100' haben, wie in Fig. 1 bis 3 dargestellt.

Auch ist der Magnetring 60 im Bereich dieser Stirnseite 94 mit der Schrägfläche 68 versehen, die bei diesem Beispiel etwa die Form eines Kegelstumpfs hat und einem Übergang von der Stirnseite 94 zu den flachen Längsnuten 86 bildet. Dies begünstigt während des Einschiebens die Kleberverteilung auf dem Magnetring 60.

Bei der Montage wird der Magnetring 60, der bevorzugt aus einem geeigneten Roh-Granulat (Kunststoffkörner mit eingebetteten Hartferritpartikeln) durch Spritzguss hergestellt werden kann und dessen Außenseite 61 in der beschriebenen Weise ausgebildet ist, mittels der Klebemasse 59 in die Innenseite 58 des becherartigen Rotorteils 56 eingeklebt. Da letzteres gewöhnlich aus Weicheisen hergestellt ist, stellt das Verkleben auf der Seite des Rotorteils 56 kein Problem dar, da dort durch den Klebevorgang an der Grenzfläche zwischen der Klebemasse 59 und dem Rotorteil 56 starke Adhäsionskräfte entstehen.

Anders ist das bei gepritzten, kunststoffgebundenen Magnetringen 60, da diese Gleitmittel in Form von Silikonmolekülen enthalten können, die durch die üblichen Reinigungsverfahren allenfalls zeitweilig entfernt werden können.

Durch die beschriebene und dargestellte Oberflächenstruktur des Magnetrings 60 vermeidet man das Risiko, dass sich letzterer mit der Zeit vom Rotorteil 56 löst, denn die Klebstoff masse 59, welche beim Klebevorgang aushärtet, bildet formschlüssige Verbindungen besonders mit den Vertiefungen 86 dieser reliefartigen Oberflächenstruktur 61. Die Höhen 84 werden von der Klebemasse 59 umflossen, bewirken dadurch zusätzliche formschlüssige Verbindungen, und verhindern ein Verschieben und/oder Verdrehen des Magnetrings 60 auch dann, wenn die Adhäsionskräfte an seiner Oberfläche 61 manchmal sehr niedrig sein sollten. Außerdem ergibt sich eine günstige Form des magnetischen Kreises im Rotor 26.

Diese sichere Verbindung wird also zum einen bewirkt durch die Adhäsionskräfte der Klebemasse 59 an der Grenzfläche zum Rotorteil 56, und zum anderen durch die Kohäsionskräfte zwischen den Molekülen in der Klebstoffschicht 59. Die geringen Adhäsionskräfte an der Grenzfläche zu einem kunststoffgebundenen Magnetring 60 können folglich nicht zum Versagen der Klebeverbindung führen. Durch die beschriebene, reliefartige Ausbildung der Außenseite 61 des Magnetrings 60 ergibt sich also - ohne Mehrkosten - eine wesentliche Erhöhung der Prozesssicherheit und der Lebensdauer solcher Motoren, ohne dass deren Eigenschaften darunter leiden.

Wie Fig. 4, Fig. 5 und Fig. 6 zeigen, hat der Magnetring 60 an seinem dem Boden 57 zugewandten Endbereich und dort auf seiner radial äußeren Seite 61 seine schräge Fläche 68, die zusammen mit dem Rotorteil 56 eine Ausnehmung 69 (Fig. 6) von etwa dreieckförmigem Querschnitt bildet. Bei der Ausführungsform nach den Fig. 1 bis 6 wird diese schräge Fläche 68 gebildet von dem kegelstumpfförmigen Abschnitt 68, vgl. die Fig. 2 bis 6. Dieser Abschnitt 68 hat Vorteile beim Einkleben des Magnetrings 60 in das Rotorteil 56, wie im Folgenden erläutert wird. Wie die Fig. 4 bis 6 zeigen, nimmt der radiale Abstand zwischen der schrägen Fläche 68 und der Innenseite 58 in Richtung weg vom Boden 57 ab.

Der kegelstumpfförmige Abschnitt 68 schneidet gemäß Fig. 2 und 3 die flachen Längsnuten 86 und die flachen Längsrippen 84, so dass aus ihm Klebemasse 59 in die flachen Längsnuten 86 und durch diese auch in die Ringnut 88 fließen kann. Dabei bildet sich auf den flachen Längsrippen 84 ein Film 59F (Fig. 4) aus Klebemasse, der aber dünn sein sollte, da er im Rotor 26 wie ein magnetischer Luftspalt wirkt und folglich den vom Magnetring 60 erzeugten magnetischen Fluss im Luftspalt 109 (Fig. 6) etwas schwächen könnte.

Montage des Magnetrings 60 im Rotorteil 58 Bei einer Methode wird vor der Montage im Bereich des offenen Endes 55 des Rotortopfs 56 auf dessen Innenseite 58 eine Raupe 59A aus Klebemasse 59 aufgetragen, wie das in Fig. 1 dargestellt ist.

Zum Auftragen verwendet man eine Klebstoff-Dosiervorrichtung (metering device), wie sie üblicherweise in der industriellen Verklebung zum Auftragen des Klebstoffs verwendet wird und die es ermöglicht, eine definierte Menge von Klebstoff 59 in Form dieser Raupe 59a aufzutragen. Letztere ist bevorzugt frei von Unterbrechungen, also durchgehend. Die erforderliche Menge an Klebstoff wird vorher z.B. durch Versuche ermittelt.

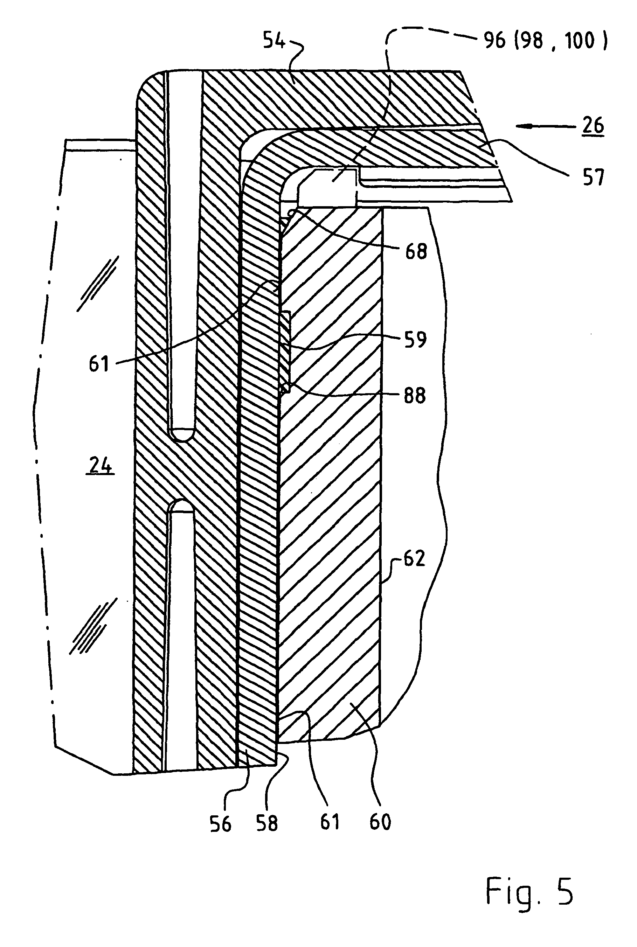

Dann wird, bezogen auf Fig. 1, der Magnetring 60 von unten her in die Innenseite 58 des Rotortopfs 56 eingeschoben, wobei die kegelstumpfförmige Fläche 68 gegen die Raupe 59A stößt und diese nach oben verschiebt, wie das in Fig. 4 und Fig. 5 schematisch dargestellt ist.

Wie in der Mitte von Fig. 2 durch Pfeile 108 beispielhaft und schematisch angedeutet, wird hierbei die Klebemasse 59 durch die Längsrippen 84 nach Art eines Mengenteilers geteilt und strömt in weitgehend identischen Mengen in die einzelnen flachen Längskanäle 84, und von dort zur Ringnut 88.

Dort bewirken die flachen Längsrippen 84 erneut eine Teilung der Klebemasse, so dass diese - weiterhin gleichmäßig über die Außenseite 61 verteilt - beim Einschieben des Magnetrings 60 in den unteren Bereich der flachen Kanäle 86 fließt und diese ebenfalls füllt.

Fig. 4 zeigt den Vorgang des Einführens in Richtung eines Pfeils 108. Hierbei gelangt die Klebemasse 59, die sich zunächst oben in der ringförmigen Ausnehmung 68 befindet, in die flachen Ausnehmungen 86, 88 und von der Ringnut 88 weiter in die flachen Längsnuten 86 im unteren Teil des Magnetrings 60. Auf diese Weise werden (durch die Längsverschiebung des Magnetrings 60 in Richtung des Pfeiles 108) die Längsnuten 86 und die Ringnut 88 mit Klebemasse 59 gefüllt.

Fig. 5 zeigt, wie am Ende der Längsverschiebung der Magnetring 60 mit seinen Zapfen 96, 98, 100 gegen den Boden 57 des Topfs 56 stößt, wodurch die Montage abgeschlossen ist. Die Ringnut 88 ist hierdurch weitgehend mit Klebemasse 59 gefüllt, ebenso die Längsnuten 86 (nicht dargestellt), während der Ringkanal 68 entweder gar keine Klebemasse 59 mehr enthält, oder nur kleine Reste. Dies reduziert Unwuchten und erleichtert die weitere Verarbeitung, da die Klebemasse 59 rasch ausgehärtet werden kann und sehr gleichmäßig auf der Außenseite 61 des Magnetrings 60 verteilt ist. Letzterer ist also bei der Montage gleichzeitig auch ein Werkzeug, das eine gleichmäßige Verteilung der Klebemasse 59 auf seinem eigenen Außenumfang 61 bewirkt, wobei durch den Eingriff der ausgehärteten Klebemasse 59 in die flachen Längsnuten 86 und die Ringnut 88 eine sichere, formschlüssige Befestigung des Magnetrings 60 bewirkt wird, selbst dann, wenn dessen Außenseite 61 mit Spuren von Silikon oder dgl. verunreinigt sein sollte.

Nach dem Aushärten der Klebemasse 59 wird der Rotor 26 mit dem Stator 30 verheiratet, vgl. Fig. 6, wobei die am Boden 57 befestigte Welle 44 (Fig. 1), die in Fig. 6 nicht dargestellt ist, z.B. in (nicht dargestellte) Gleitlager oder Wälzlager im Lagerrohr 42 gesteckt wird. Dabei entsteht zwischen dem Außenumfang 107 des Statorblechpakets 40 und der Innenseite 50 des Magnetrings 60 ein magnetisch wirksamer Luftspalt 109, vgl. Fig. 6. Der Magnetring 60 kann radial magnetisiert sein, was nicht dargestellt ist.

Als Alternative kann man bei der Version des Magnetrings 60 gemäß Fig. 1 bis 6 den Klebstoff 59 auch in der benötigten Menge in die umlaufende Nut 88 dosieren, bevor der Magnetring 60 in den Becher 56 eingeschoben wird.

Der überstehende Klebstoff 59 wird in diesem Fall in beiden Richtungen in die flachen Längsnuten 86 gepresst. Klebstoff, der oben aus den Längsnuten 86 austritt, gelangt zuerst zur Schrägfläche 68, vgl. Fig. 4 und 5, und wird dann durch die fortlaufende Bewegung des Magnetrings 60 in Richtung des Pfeiles 108 der Fig 4 wieder nach unten in die flachen Längsnuten 86 transportiert. Der Vorteil ist, dass man besonders leicht kontrollieren kann, ob die Nut 88 beim Dosieren vollständig mit Klebstoff 59 gefüllt worden ist. Dies ist vor allem deshalb wichtig, weil sonst aufwendige Auswuchtvorgänge notwendig werden können.

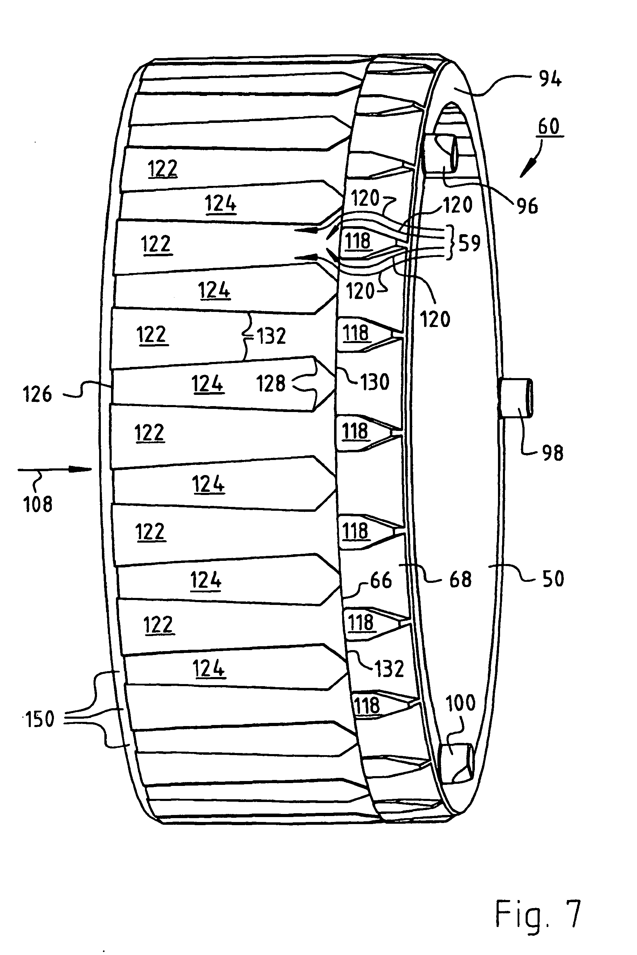

Naturgemäß sind im Rahmen der Erfindung viele Variationen möglich, wie sie nachfolgend anhand der Fig. 7 bis 14 erläutert werden. Dabei werden für gleiche oder gleich wirkende Teile wie in den Fig. 1 bis 6 dieselben Bezugszeichen verwendet. Der Motor (Fig. 1) wird nicht nochmals dargestellt, da er - bis auf die äußere Form des Magnetrings 60 - unverändert sein kann.

Fig. 7 zeigt eine Variante, bei der, ebenso wie bei dem Magnetring 60 der Fig. 2, das rechte Ende des Magnetrings 60 bis zu einer Grenze 66 in Form eines Kegelstumpfs 68 ausgebildet ist, während der linke Teil einen im wesentlichen zylindrischen Verlauf hat. Auf dem Kegelstumpf 68 sind Stromteiler 118 vorgesehen, die dazu dienen, dann, wenn der Magnetring 60 in Richtung des Pfeils 108 in das Rückschlussteil 56 eingeschoben wird, die Klebemasse 59 (aus der Raupe 59A) so umzulenken, wie das in Fig. 7 durch Flusslinien 120 schematisch angedeutet ist, und dadurch die Verteilung der Klebemasse 59 im Klebespalt (zwischen Magnetring 60 und Rückschlussteil 56) zu optimieren. Dabei wird die Klebemasse 59 in flache Kanäle 122 gelenkt, die sich zwischen flachen Erhöhungen 124 in Längsrichtung erstrecken, wie das die Zeichnungen zeigen.

Die flachen Erhöhungen 124 haben etwa die Form von Verkehrspfeilen, d.h. sie erstrecken sich von einem schmalen linken Ende 126 nach rechts zu einer breitesten Stelle 128 und verjüngen sich von dort nach rechts bis zu einer schmalen Spitze 130, die hier an der Grenze 66 zum Kegelstumpf 68 liegt. Wie durch die Flusslinien 120 symbolisch angedeutet, wird die Klebemasse 59 durch den betreffenden Stromteiler 118 und die Erhöhungen 124 umgelenkt und zu einer der flachen Vertiefungen 122 zwischen zwei flachen Erhöhungen 124 geleitet, um diese Vertiefungen auszufüllen. Durch die steilen Kanten 132 zwischen den Erhöhungen 124 und den Vertiefungen 122 ergibt sich eine entsprechende formschlüssige Verbindung sowohl in Längs- wie in Umfangsrichtung.

Eine solche Form des Magnetrings 60 ist durch Kunststoff-Spritzguss oft leichter herzustellen als die Form nach den Fig. 2 und 3. lhr Vorteil ist eine Maximierung des Magnetvolumens, also eine gute Ausnützung des Dauermagnetrings 60.

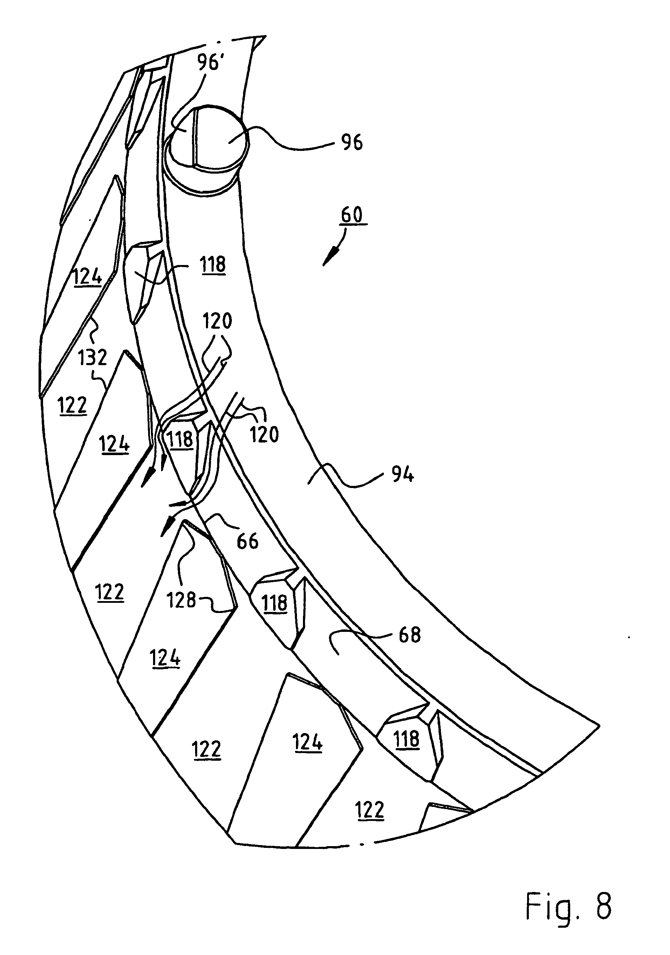

Fig. 8 zeigt eine Ausschnittsvergrößerung aus Fig. 7.

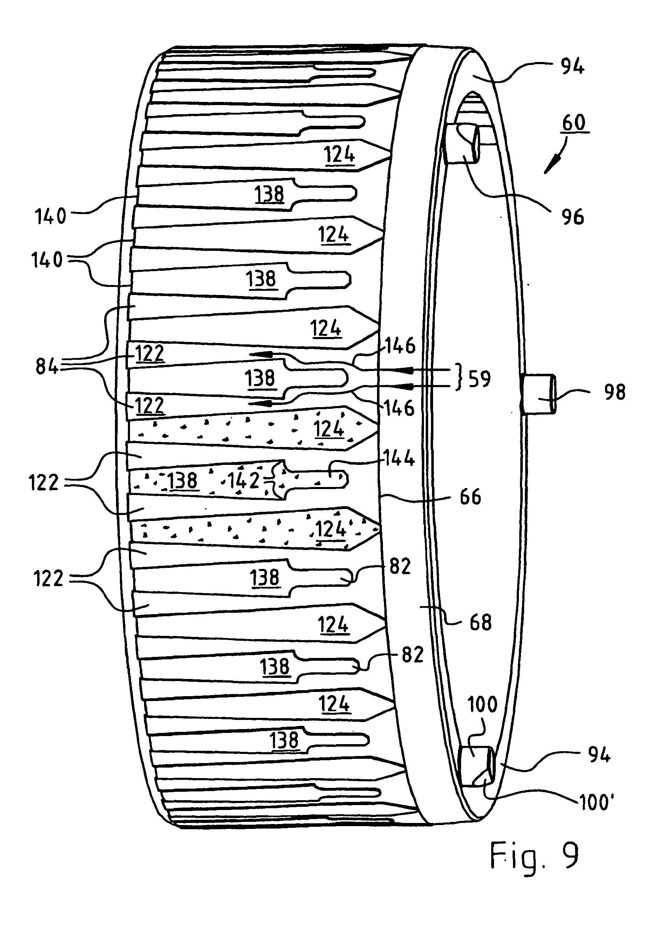

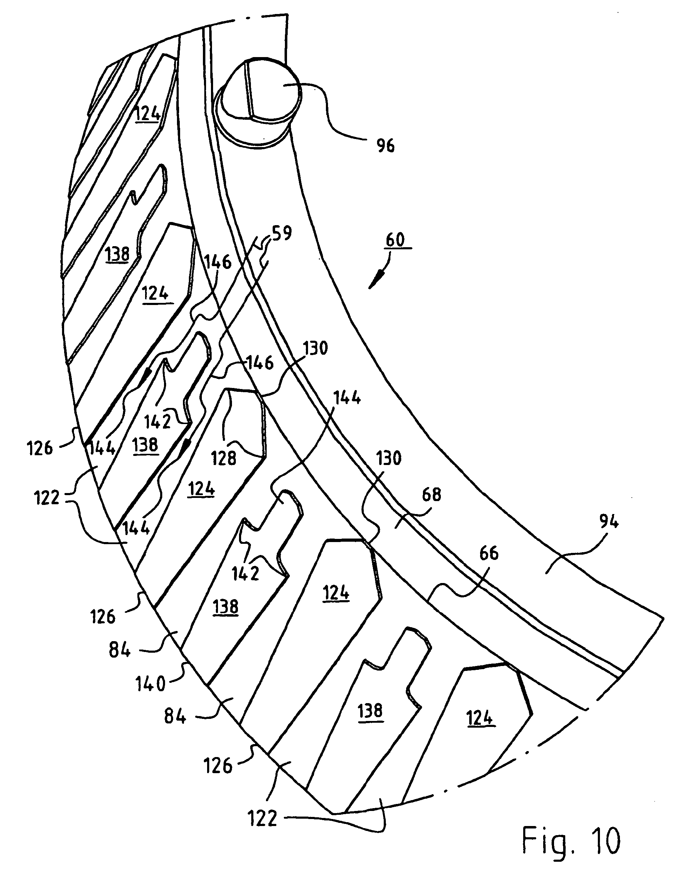

Fig. 9 und Fig. 10 zeigen eine Variante zu der Ausführungsform nach den Fig. 7 und 8. Der Magnetring 60 nach den Fig. 9 und 10 hat rechts ebenfalls einen kegelstumpfförmigen Abschnitt 68, der aber, anders als bei den Fig. 7 und 8 nicht mit Stromteilern versehen ist. Die flachen Erhöhungen 124 haben die gleiche Form wie in den Fig. 7 und 8, weshalb auf die dortige Beschreibung verwiesen wird.

In den flachen Vertiefungen 122 zwischen zwei Erhöhungen 124 befindet sich jeweils eine flache Erhöhung 138. Von einem kurzen Abschnitt 140 an ihrem linken Ende ausgehend verbreitert sich die Erhöhung 138 bis zu einer Stelle 142 maximaler Breite. Ab der Stelle 142 nimmt nach rechts ihre Breite stark ab bis zu einem schmalen, fingerartigen Abschnitt 144, der als Stromteiler für den Klebstoff 59 wirkt, wie das durch Flusslinien 146 symbolisch angedeutet ist.

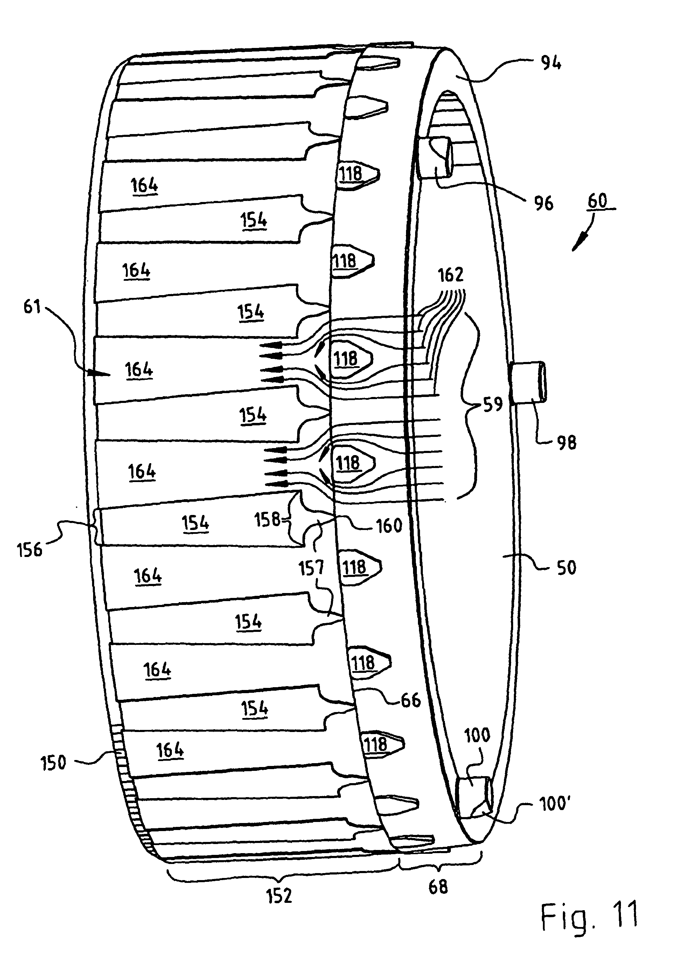

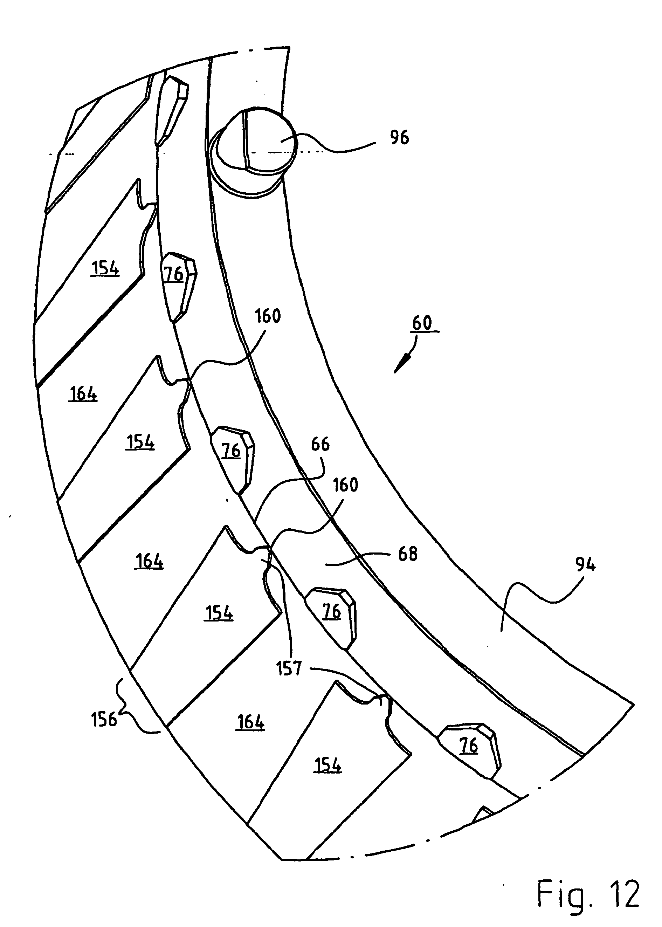

Fig. 11 und 12 zeigen eine andere Variante, welche aus Elementen der Fig. 7 und 8 und aus Elementen der Fig. 9 und 10 zusammengesetzt ist.

Der Magnetring 60 nach den Fig. 11 und 12 entspricht in seiner Grundstruktur den vorhergehenden Varianten, d.h. er hat innen eine zylindrische Ausnehmung 50. Links hat er auf seiner Außenseite 61 zunächst einen kurzen kegelstumpfförmigen Abschnitt 150, dann einen Abschnitt 152, der im Wesentlichen zylindrisch ist und sich etwa bis zu einer Grenze 66 erstreckt, und rechts von dieser einen kegelstumpfförmigen Abschnitt 68, der sich nach rechts verjüngt und bei der Stirnseite 94 endet. An diese schließen sich nach rechts noch die Distanzglieder 96, 98 und 100 an, deren Funktion bereits beschrieben wurde.

Auf dem frustokonischen Abschnitt 68 befinden sich Stromteiler 118, die, anders als in Fig. 8, kürzer sind als der Abschnitt 68, jedoch sonst den gleichen Aufbau haben wie die Stromteiler 118 der Fig. 7 und 8. Ihre Funktion ist es auch hier, die Klebemasse 59 aus der Raupe 59A gleichmäßig auf dem Magnetring 60 zu verteilen. Die Struktur der Stromteiler 118 ist für den Fachmann aus den Zeichnungen klar ersichtlich, und sie erstrecken sich radial nach außen bis etwa zum Hüllzylinder 106, der in Fig. 2 dargestellt ist, so dass die Klebemasse 59 gezwungen ist, an einem Stromteiler 118 auf dessen beiden Seiten vorbeizufließen, wodurch eine effektive Stromteilung bewirkt wird.

Auf dem zylindrischen Abschnitt 152 befinden sich längliche, flache Erhöhungen 154, die hinsichtlich ihrer Form und Funktion etwa den Erhöhungen 138 nach den Fig. 9 und 10 entsprechen.

Die Erhöhungen 154 beginnen links an einem schmalen Bereich 156 und verbreitern sich von dort nach rechts bis zu einer breitesten Stelle 158. Anschließend reduziert sich nach rechts hin ihre Breite sehr stark bis zu einem schmalen Abschnitt 157. Ganz rechts haben sie eine im Wesentlichen spitze Stelle 160, die etwa mit der Grenze 66 zusammenfällt.

Fig. 11 zeigt schematisch die Flusslinien 162 des Klebstoffs 59. Diese werden einmal durch die Flussteiler 118 geteilt, und zum anderen durch die Abschnitte 157 und deren rechte Spitzen 160, so dass in alle flachen Vertiefungen 164 (zwischen den flachen Erhöhungen 154) etwa gleich viel Klebemasse 59 einströmt. Hierdurch erhält man auch dann eine sichere Verbindung, wenn auf der Außenseite 61 des Magnetrings 60 Silikonreste oder dgl. verblieben sind.

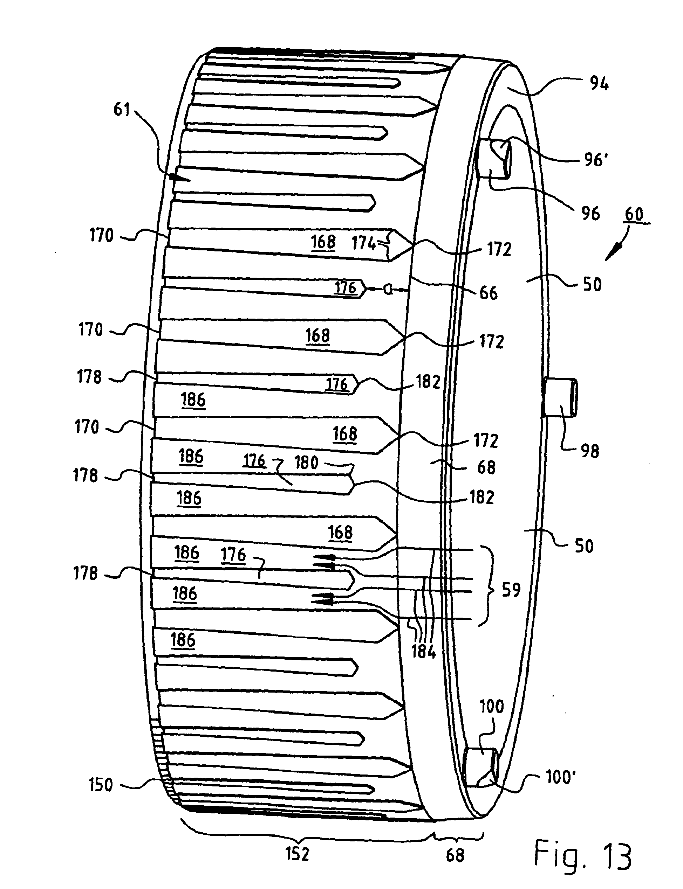

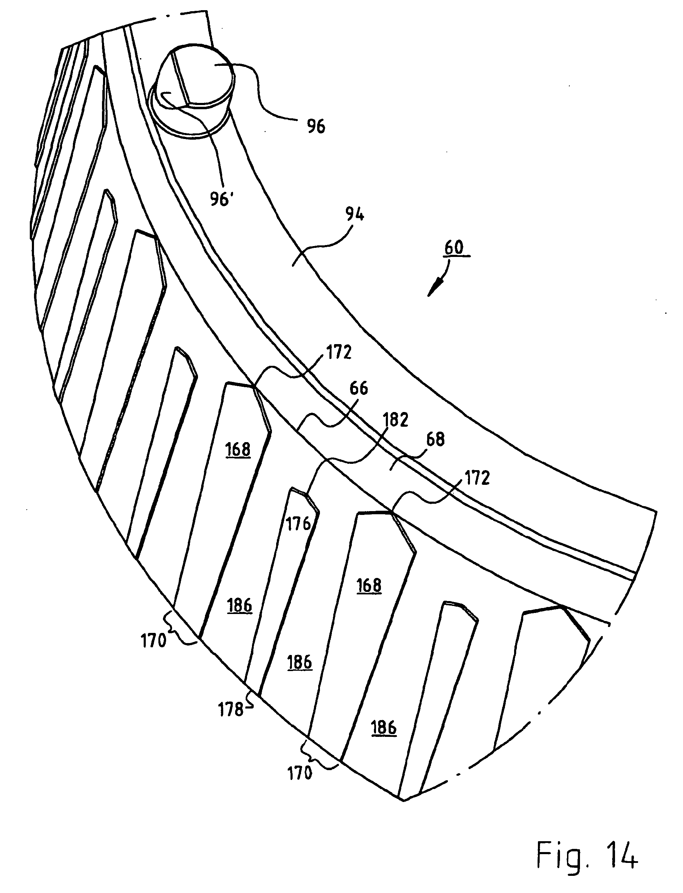

Fig. 13 und Fig. 14 zeigen ein fünftes Ausführungsbeispiel. Bei ihm hat die reliefartige Außenseite 61 des Magnetrings 60 einen sehr einfachen Aufbau, der auch die Herstellung durch Kunststoff-Spritzguss weitgehend vereinfacht. Die kegelstumpfförmige Fläche 68 erstreckt sich nach links bis zur Grenze 66, an die sich nach links der im wesentlichen zylindrische Abschnitt 152 mit seiner reliefartigen Oberflächenstruktur anschließt.

Auf der schrägen Fläche 68 sind bei Fig. 13 und 14 keine Volumenstromteiler angeordnet. Stattdessen sind auf dem zylindrischen Abschnitt 152 zwei Arten von länglichen, flachen Erhöhungen vorgesehen, welche als Stromteiler wirken. Das sind zum einen längere flache Erhöhungen 168, welche etwa dieselbe Form haben wie die Erhöhungen 124 nach Fig. 9 und 10. Sie erstrecken sich von einer schmalen Stelle 170 am linken Ende (Fig. 13) zu einer noch schmäleren Stelle 172 am rechten Ende, das hier auf der Grenze 66 liegt. Ausgehend von der Stelle 170 verbreitern sie sich auf etwa 80 bis 95 % der Längserstreckung bis zu einer breitesten Stelle 174 und nehmen dann auf dem Rest bis zur Stelle 172 wieder ab.

Zwischen den längeren Erhöhungen 168 liegen kürzere und schmalere Erhöhungen 176, die sich von einer schmalen Stelle 178 (links) über eine breite Stelle 180 bis zu einer Spitze 182 erstrecken. Die Spitze 182 hat einen Abstand a von der Grenze 66, und dieser Abstand a beträgt etwa 5 ... 15 % der Länge der flachen Erhöhungen 168.

Fig. 13 zeigt auch schematisch den Verlauf der Flusslinien 184, und man erkennt, dass auch hier die etwas tieferen Zonen 186 zwischen den Erhöhungen 168 und 176 gleichmäßig mit Klebemasse 59 gefüllt werden, so dass am rechten Ende der flachen Zonen 186 kein Überlauf auftritt und der Klebespalt (zwischen dem magnetischen Rückschluss 56 der Fig. 1 und dem Magnetring 60 der Fig. 13 und 14) bei der Montage gleichmäßig mit Klebemasse 59 gefüllt wird, um eine optimale mechanische Verbindung zu erreichen.

Wie die Beispiele zeigen, bestehen im Rahmen der Erfindung, die durch die Ansprüche definiert ist, vielfältige Variationsmöglichkeiten.

## Patentansprüche

1. Elektromotor, welcher aufweist:
Einen Stator (30);
einen Rotor (36) mit einem becherartigen Rotorteil (56) und mit einem Magnetring (60), welch letzterer einen Außenumfang (61) hat,
wobei das becherartige Rotorteil (56) eine Innenausnehmung (58) aufweist und eine offene Seite (55) für das Einführen des Magnetrings (60) hat, **dadurch gekennzeichnet, dass**
der Magnetring (60) in die Innenausnehmung (58) des becherartigen Rotorteils (56) eingeklebt ist,
an dem Außenumfang (61) des Magnetrings (60) flache Erhöhungen (84) und flache Vertiefungen (86) vorgesehen sind, die zumindest teilweise in Längsrichtung des Magnetrings (60) verlaufen,
und der Außenumfang (61) des Magnetrings (60) an derjenigen Seite (94) des Magnetrings (60), welche nach der Montage von der offenen Seite (55) des becherartigen Rotorteils (56) abgewandt ist, mindestens eine von einer Schrägfläche (68) begrenzte, in Umfangsrichtung verlaufende Ausnehmung (69) aufweist, deren radialer Abstand von der Innenausnehmung (58) des becherartigen Rotorteils (56) in Richtung weg von dessen offener Seite (55) zunimmt und im Zusammenwirken mit dem becherartigen Rotorteil (56) die in Umfangsrichtung verlaufende Ausnehmung (69) bildet, die mit mindestens einem Teil der flachen Vertiefungen (86; 122, 164; 186) des Magnetrings (60) in Verbindung steht.

2. Elektromotor nach Anspruch 1, bei welchem die am Magnetring (60) vorgesehene Schrägfläche (68) als Teil eines kegelstumpfförmigen Abschnitts des Magnetrings (60) ausgebildet ist.

3. Elektromotor nach Anspruch 1 oder 2, bei welchem der Außenumfang (61) des Magnetrings (60) mindestens bereichsweise eine zylindrische Hüllfläche (Fig. 2: 106) aufweist.

4. Elektromotor nach einem der vorhergehenden Ansprüche, bei welchem der Außenumfang (61) des Magnetrings (60) nach Art eines Reliefs mit flachen Vertiefungen (86, 88) versehen ist.

5. Elektromotor nach einem der vorhergehenden Ansprüche, bei welchem der Außenumfang (61) des Magnetrings (60) nach Art eines Tiefdruckzylinders mit flachen Vertiefungen (86, 88) versehen ist.

6. Elektromotor nach Anspruch 4 oder 5, bei welchem die Breite wenigstens eines Teils der flachen Vertiefungen (122; 164; 186) mindestens bereichsweise weg vom offenen Ende des becherartigen Rotorteils (56) abnimmt.

7. Elektromotor nach einem der vorhergehenden Ansprüche, bei welchem auf der von der offenen Seite (55) des becherartigen Rotorteils (56) abgewandten Seite des Rotors (26) flache Erhöhungen (84; 118; 124, 138; 154; 168, 176) am Magnetring (60) vorgesehen sind, welche nach Art eines Mengenteilers dazu ausgebildet sind, bei der Montage die Gleichmäßigkeit des Zuflusses von Klebemasse (59) zu den flachen Vertiefungen (86; 164) zu erhöhen.

8. Elektromotor nach Anspruch 7, bei welchem am Übergang von einer flachen Vertiefung (122) zu einer flachen Erhöhung (124) eine Kante (132) gebildet ist, so dass die flache Erhöhung (124) nach Art einer Insel über tiefer gelegene Zonen der zu verklebenden Magnetringoberfläche (61) übersteht.

9. Elektromotor nach einem der vorhergehenden Ansprüche, bei welchem mindestens eine Kante (132) in Form einer Schräge ausgebildet ist, welche mit der Klebemasse (59) nach deren Vernetzen eine formschlüssige Verbindung bildet, um **dadurch** einer Lageänderung des Magnetrings (60) relativ zum becherartigen Rotorteil (56) entgegen zu wirken.

10. Elektromotor nach einem der vorhergehenden Ansprüche, bei welchem der Magnetring (60) durch Kunststoffspritzguss oder Sintern aus einem Werkstoff hergestellt ist, der einen Anteil von Silikon enthält.

11. Elektromotor nach einem der vorhergehenden Ansprüche, bei welchem der Magnetring (40) durch Kunststoffspritzguss oder Sintern aus einem Granulat hergestellt ist, das Kunststoffkörner enthält, in welche Partikel aus Hartferriten eingebettet sind.

12. Elektromotor nach einem der vorhergehenden Ansprüche, bei welchem der Magnetring (60) Silikon enthält.

13. Elektromotor nach einem der vorhergehenden Ansprüche, bei welchem der auf die Hüllkurve (106) bezogene Mittelwert der Tiefe der flachen Vertiefungen (86; 122; 164; 186) unter einem Millimeter liegt.

14. Elektromotor nach Anspruch 13, bei welchem der Mittelwert unter 0,5 mm liegt.

## Claims

1. An electric motor comprising:
a stator (30);
a rotor (36) having a bowl-like rotor part (56) and a magnet ring (60), the latter having an outer periphery (61);
the bowl-like rotor part (56) having an inner recess (58) and an open side (55) for introducing the magnet ring (60), **characterized in that**
the magnet ring (60) is adhesively bonded into the inner recess (58) of the bowl-like rotor part (56);
on the outer periphery (61) of the magnet ring (60), flat prominences (84) and flat indentations (86), which run at least partly in the longitudinal direction of the magnet ring (60), are provided,
and the outer periphery (61) of the magnet ring (60) has, on the side (94) of the magnet ring (60) which after assembly faces away from the open side (55) of the bowl-like rotor part (56), comprises at least one recess (69) which is delimited by an inclined plane (68) and runs in the circumferential direction, and whose radial distance from the inner recess (58) of the bowl-like rotor part (56) increases in the direction away from its open side (55), and in co-operation with the bowl-like rotor part (56) forms the recess (69) which runs in the circumferential direction, and which is connected to at least a part of the flat indentations (86; 122; 164; 186) of the magnet ring (60).

2. The electric motor according to Claim 1, wherein the inclined plane (68) provided on the magnet ring (60) is in the form of a frustoconical part of the magnet ring (60).

3. The electric motor according to Claim 1 or 2, wherein the outer periphery (61) of the magnet ring (60) has a cylindrical envelope (Fig. 2: 106) at least in areas.

4. The electric motor according to any one of the preceding claims, wherein the outer periphery (61) of the magnet ring (60) is provided with flat indentations (86, 88), like a relief.

5. The electric motor according to any one of the preceding claims, wherein the outer periphery (61) of the magnet ring (60) is provided with flat indentations (86, 88), like a gravure cylinder.

6. The electric motor according to Claim 4 or 5, wherein the width of at least part of the flat indentations (122; 164; 186) decreases away from the open end of the bowl-like rotor part (56) at least in areas.

7. The electric motor according to any one of the preceding claims, wherein on the side of the rotor (26) facing away from the open side (55) of the bowl-like rotor part (56), flat prominences (84; 118; 124, 138; 154; 168, 176) are provided on the magnet ring (60), and like a flow divider are formed to increase the evenness of the flow of adhesive mass (59) to the flat indentations (86; 164) during assembly.

8. The electric motor according to Claim 7, wherein at the transition from a flat indentation (122) to a flat prominence (124), an edge (132) is formed, so that the flat prominence (124) projects like an island above lower zones of the magnet ring surface (61) to be bonded adhesively.

9. The electric motor according to any one of the preceding claims, wherein at least one edge (132) is formed as an oblique edge, which after the adhesive mass (59) has cured, forms a positively locked connection with it, thus to counteract a change of position of the magnet ring (60) relative to the bowl-like rotor part (56).

10. The electric motor according to any one of the preceding claims, wherein the magnet ring (60) is produced from a material containing a proportion of silicone, by injection moulding of plastics material or by sintering.

11. The electric motor according to any one of the preceding claims, wherein the magnet ring (60) is produced from a granulated material containing grains of plastics material in which particles of hard ferrites are embedded, by injection moulding of plastics material or by sintering.

12. The electric motor according to any one of the preceding claims, wherein the magnet ring (60) contains silicone.

13. The electric motor according to any one of the preceding claims, wherein the mean value of the depth of the flat indentations (86; 122; 164; 186) relative to the envelope (106) is below one millimeter.

14. The electric motor according to Claim 13, wherein the mean value is below 0.5 mm.

## Revendications

1. Moteur électrique, lequel présente :
un stator (30) ;
un rotor (36) avec une partie de rotor en forme de godet (56) et avec un aimant annulaire (60) qui possède un pourtour extérieur (61),
la partie de rotor en forme de godet (56) présentant un évidement intérieur (58) et ayant un côté ouvert (55) pour l'introduction de l'aimant annulaire (60), **caractérisé en ce que**
l'aimant annulaire (60) est collé dans l'évidement intérieur (58) de la partie de rotor en forme de godet (56),
des bossages plats (84) et des renfoncements plats (86) sont prévus sur le pourtour extérieur (61) de l'aimant annulaire (60), qui s'étendent au moins partiellement en direction longitudinale de l'aimant annulaire (60),
et le pourtour extérieur (61) de l'aimant annulaire (60) présente, du côté (94) de l'aimant annulaire (60) qui, après le montage, est éloigné du côté ouvert (55) de la partie de rotor en forme de godet (56), au moins un évidement (69) s'étendant en direction circonférentielle, limité par une surface oblique (68), dont la distance radiale à l'évidement intérieur (58) de la partie de rotor en forme de godet (56) augmente dans la direction opposée à son côté ouvert (55) et forme en coopération avec la partie de rotor en forme de godet (56) l'évidement (69) s'étendant en direction circonférentielle qui est en communication avec au moins une partie des renfoncements plats (86 ; 122 ; 164 ; 186) de l'aimant annulaire (60).

2. Moteur électrique selon la revendication 1, dans lequel la surface oblique (68) prévue sur l'aimant annulaire (60) est réalisée sous la forme d'une partie d'une portion tronconique de l'aimant annulaire (60).

3. Moteur électrique selon la revendication 1 ou 2, dans lequel le pourtour extérieur (61) de l'aimant annulaire (60) présente, au moins par endroits, une surface d'enveloppe cylindrique (fig. 2 : 106).

4. Moteur électrique selon une des revendications précédentes, dans lequel le pourtour extérieur (61) de l'aimant annulaire (60) est pourvu de renfoncements plats (86, 88) à la manière d'un relief.

5. Moteur électrique selon une des revendications précédentes, dans lequel le pourtour extérieur (61) de l'aimant annulaire (60) est pourvu de renfoncements plats (86, 88) à la manière d'un cylindre d'héliogravure.

6. Moteur électrique selon la revendication 4 ou 5, dans lequel la largeur d'au moins une partie des renfoncements plats (122; 164; 186) diminue, au moins par endroits, dans la direction opposée à l'extrémité ouverte de la partie de rotor en forme de godet (56).

7. Moteur électrique selon une des revendications précédentes, dans lequel des bossages plats (84 ; 118 ; 124, 138 ; 154 ; 168, 176) sont prévus sur l'aimant annulaire (60) du côté du rotor (26) éloigné du côté ouvert (55) de la partie de rotor en forme de godet (56), lesquels sont formés à la manière d'un diviseur de débit pour, lors du montage, augmenter la régularité de l'afflux de masse collante (59) vers les renfoncements plats (86 ; 164).

8. Moteur électrique selon la revendication 9, dans lequel une arête (132) est formée à la transition d'un renfoncement plat (122) vers un bossage plat (124), de sorte que le bossage plat (124) fait saillie à la manière d'une île de zones situées plus bas de la surface d'aimant annulaire (61) à coller.

9. Moteur électrique selon une des revendications précédentes, dans lequel au moins une arête (132) est réalisé sous la forme d'un chanfrein, lequel forme avec la masse collante (59), après sa réticulation, une liaison mécanique, pour s'opposer de cette manière à un changement de position de l'aimant annulaire (60) par rapport à la partie de rotor en forme de godet (56).

10. Moteur électrique selon une des revendications précédentes, dans lequel l'aimant annulaire (60) est fabriqué par injection de matière plastique ou frittage à partir d'un matériau qui contient une part de silicone.

11. Moteur électrique selon une des revendications précédentes, dans lequel l'aimant annulaire (40) est fabriqué par injection de matière plastique ou frittage à partir d'un granulat qui contient des grains de matière plastique dans lequel sont incorporées des particules de ferrites dures.

12. Moteur électrique selon une des revendications précédentes, dans lequel l'aimant annulaire (60) contient de la silicone.

13. Moteur électrique selon une des revendications précédentes, dans lequel la valeur moyenne de la profondeur des renfoncements plats (86 ; 122 ; 164 ; 186) par rapport à l'enveloppe (106) est inférieure à un millimètre.

14. Moteur électrique selon la revendication 13, dans lequel la valeur moyenne est inférieure à 0,5 mm.
